# EUROPÄISCHE PATENTSCHRIFT

(11) **EP 3 310 619 B1**
(45) Veröffentlichungstag und Bekanntmachung des Hinweises auf die Patenterteilung: **17.04.2019**
(21) Anmeldenummer: 16726081.9
(22) Anmeldetag: 30.05.2016
(51) Int. Cl.: B60R 5/04

(54) **LADERAUMABDECKUNG FÜR EIN KRAFTFAHRZEUG**
LUGGAGE COMPARTMENT COVER FOR A MOTOR VEHICLE
CACHE-BAGAGES POUR UN VÉHICULE AUTOMOBILE

(30) Priorität: 17.06.2015 DE 102015007650
(43) Veröffentlichungstag der Anmeldung: 25.04.2018
(73) Patentinhaber: BOS GmbH & Co. KG, 73760 Ostfildern (DE)
(72) Erfinder: HINTENNACH, Markus, 73666 Baltmannsweiler (DE)
(74) Vertreter: Patentanwälte Ruff, Wilhelm, Beier, Dauster & Partner mbB
(86) Internationale Anmeldenummer: PCT/EP2016/062137
(87) Internationale Veröffentlichungsnummer: WO 2016/202565

(56) Entgegenhaltungen:
- DE-A1-102010 028 787
- DE-A1-102010 033 696

## Beschreibung

Die Erfindung betrifft eine Laderaumabdeckung für ein Kraftfahrzeug mit einer flexiblen Abdeckbahn, die auf einer Wickelwelle zwischen einer aufgespannten Funktionsstellung und einer aufgewickelten Ruhestellung auf- und abwickelbar gehalten ist, sowie mit einem zumindest weitgehend formstabilen Konturabschnitt, der an einem in Aufspannrichtung vorderen Stirnendbereich der Abdeckbahn angebracht ist, und dem Halteelemente zur Sicherung des Konturabschnitts in der aufgespannten Funktionsstellung der Abdeckbahn an laderaumfesten Haltebereichen zugeordnet sind.

Eine derartige gattungsgemäße Laderaumabdeckung ist für einen Kombi-Personenkraftwagen aus DE102010033696 A1 bekannt. Die Laderaumabdeckung ist in einem Laderaum des Personenkraftwagens vorgesehen und weist eine flexible Abdeckbahn auf, die auf einer Wickelwelle auf- und abwickelbar gehalten ist. Die Wickelwelle ist in einem Kassettengehäuse untergebracht, das hinter einer Rückenlehnenanordnung einer Fondsitzbank etwa auf Höhe einer Fahrzeugbrüstung fahrzeugfest montiert ist. Die Abdeckbahn ist aus dem Kassettengehäuse heraus nach hinten zu einer Heckklappe des Laderaums hin ausziehbar und in etwa horizontal aufgespannter Funktionsstellung in fahrzeugseitigen Halteelementen einhängbar. Hierzu weist die Abdeckbahn an ihrem in Aufspannrichtung vorderen Stirnendbereich einen Konturabschnitt auf, an dem Einhängezapfen vorgesehen sind, die in den fahrzeugseitigen Halteaufnahmen in der Funktionsstellung der Abdeckbahn eingehängt werden. Der Konturabschnitt ist formstabil ausgeführt und überdeckt in aufgespannter Funktionsstellung der Abdeckbahn einen Zwischenraum zwischen einer Innenverkleidung der Heckklappe und einen Stirnrand der flexiblen Abdeckbahn. In der aufgewickelten Ruhestellung der Abdeckbahn liegt der Konturabschnitt an dem Kassettengehäuse an und ragt von dem Kassettengehäuse aus schräg nach unten und nach hinten ab.

Aufgabe der Erfindung ist es, eine Laderaumabdeckung der eingangs genannten Art zu schaffen, die eine verbesserte Ladekapazität für den Laderaum des Kraftfahrzeugs ermöglicht.

Diese Aufgabe wird dadurch gelöst, dass der Konturabschnitt derart gestaltet ist, dass er ausgehend von einer ebenen Ausrichtung zu einer Seite hin relativ zu einer parallel oder koaxial zu einer Drehachse der Wickelwelle ausgerichteten Krümmungsachse krümmbar und zu der gegenüberliegenden Seite hin in der ebenen Ausrichtung formsteif gestützt ist. Durch die erfindungsgemäße Lösung ist es möglich, den Konturabschnitt zumindest teilweise auf die Wickelwelle gemeinsam mit der flexiblen Abdeckbahn aufzuwickeln und demzufolge den Konturabschnitt in der aufgewickelten Ruhestellung der Abdeckbahn platzsparend unterzubringen. Dies erhöht eine Ladekapazität des Laderaums des Kraftfahrzeugs. Zudem ist die Laderaumabdeckung in aufgewickelter Ruhestellung der Abdeckbahn kompakter ausgeführt als beim Stand der Technik, so dass sie bei einer Entnahme aus dem Laderaum einen gegenüber dem Stand der Technik verringerten Stauraum für eine entsprechende Lagerung benötigt. Demnach behält der Konturabschnitt in aufgespannter Funktionsstellung der Abdeckbahn seine formstabile Funktion bei, indem er in ebener Ausrichtung formsteif gestützt ist. Der Konturabschnitt kann einstückig oder mehrteilig ausgeführt sein. Besonders vorteilhaft eignet sich die erfindungsgemäße Laderaumabdeckung für Personenkraftwagen in Form von Kombi-Personenkraftwagen, Großraumlimousinen, SUVs oder ähnliche Fahrzeuge, d.h. für Personenkraftwagen, deren Laderaum Teil des Fahrzeuginnenraums ist und demzufolge offen in einen Fahrgastraum übergeht.

In Ausgestaltung der Erfindung weist der Konturabschnitt mehrere quer zu der Aufspannrichtung erstreckte und in Aufspannrichtung hintereinander angeordnete Lamellen auf, die über Scharnierbereiche miteinander verbunden sind. Die Lamellen sind jeweils für sich gesehen formstabil ausgeführt und erlauben die geforderte Krümmung des Konturabschnitts durch die entsprechenden Scharnierbereiche zwischen den jeweils benachbarten Lamellen.

In weiterer Ausgestaltung der Erfindung weisen die Lamellen einander paarweise zugewandte Stützbereiche auf, die sich in der ebenen Ausrichtung des Konturabschnitts gegeneinander abstützen. Diese Stützbereiche gewährleisten, dass der Konturabschnitt sich in der ebenen Ausrichtung formsteif verhält, so dass die gewünschte Abdeckfunktion für den Konturabschnitt in der aufgespannten Funktionsstellung der Abdeckbahn gewährleistet ist. Die Stützbereiche sind vorzugsweise zu den Scharnierbereichen beabstandet, wobei die Scharnierbereiche der einen Seite und die Stützbereiche der anderen Seite des Konturabschnittes zugeordnet sind.

In weiterer Ausgestaltung der Erfindung sind die Lamellen als Massivkörper oder als offene oder geschlossene Hohlprofile gestaltet. Die Lamellen können leisten- oder streifenförmig ausgebildet sein, wenn sie als Massivkörper ausgeführt sind. Als offene Hohlprofile weisen sie vorzugsweise U-förmige Querschnittsprofile auf. Als geschlossene Hohlprofile weisen sie vorzugsweise Rohrform mit rechteckigen oder runden Hohlquerschnitten auf.

In weiterer Ausgestaltung der Erfindung sind die Lamellen ein- oder mehrschichtig oder ein- oder mehrkomponentig aufgebaut. Die Lamellen können aus Kunststoff, aus Pappe, aus Pressspan oder aus einem Verbundwerkstoff bestehen. Die Lamellen können mit einem Bezug oder einer Beschichtung versehen sein.

In weiterer Ausgestaltung der Erfindung sind die Scharnierbereiche durch Festkörpergelenke gebildet, die insbesondere einstückig an den Lamellen angeformt sind. Vorteilhaft sind die Festkörpergelenke als Filmscharniere ausgeführt. Die Festkörpergelenke können bei einteiliger Gestaltung des Konturabschnitts als Kunststoffkörper in Form von Filmscharnieren zwischen den einzelnen Lamellen ausgeformt sein. Alternativ können die Festkörpergelenke durch eine flexible Materialbahn gebildet sein, die auf einer Seite flächig mit den Lamellen verbunden ist und aufgrund ihrer Flexibilität zwischen den benachbarten Lamellen zwangsläufig ein entsprechendes Festkörpergelenk nach Art eines Filmscharniers definiert. Eine solche flexible Materialbahn ist vorzugsweise flächig mit entsprechend zugeordneten Seitenflächen der Lamellen verbunden, insbesondere durch stoff-, kraft- oder formschlüssige Verbindung. Statt einer einzelnen, flexiblen Materialbahn können die Festkörpergelenke auch durch wenigstens zwei in Aufspannrichtung parallel zueinander verlaufende flexible Bänder gebildet sein, die mit den Lamellen auf einer Seite verbunden sind. Die Verbindung dieser flexiblen Bänder erfolgt vorzugsweise in gleicher Weise flächig wie bei der flexiblen Materialbahn.

In weiterer Ausgestaltung der Erfindung sind die Scharnierbereiche durch Scharniergelenke gebildet, die zueinander komplementäre Gelenkteile aufweisen, die jeweils paarweise benachbarten Seitenbereichen der Lamellen zugeordnet sind. Die zueinander komplementären Gelenkteile können entweder direkt miteinander verbunden, insbesondere verrastet, werden, oder sie werden durch eine als Scharnierachse dienende Steckachse in Form eines Rundstabs oder Ähnlichem miteinander verbunden. Die Gelenkteile können an den Lamellen einstückig angeformt oder als separat hergestellte Bauteile an diesen befestigt sein.

In weiterer Ausgestaltung der Erfindung sind den Stützbereichen der Lamellen Kraftschlusserhöhungselemente, insbesondere Permanentmagnetelemente, zugeordnet, die in ebener Ausrichtung des Konturabschnitts wirksam sind. Die Kraftschlusserhöhungselemente unterstützen die Formstabilität des Konturabschnitts in aufgespannter Funktionsstellung der Abdeckbahn, indem die Lamellen durch die Kraftschlusserhöhungselemente bündig aneinanderliegend gesichert werden. Die Kraftschlusserhöhungselemente sind kraftbegrenzt wirksam, um das Aufrollen der Lamellen im Bereich der Wickelwelle nicht zu behindern.

In weiterer Ausgestaltung der Erfindung sind die Scharnierbereiche exzentrisch zu einer Mittellängsebene des Konturabschnitts vorgesehen. Diese Ausgestaltung ist vorteilhaft, um die unsymmetrische Beweglichkeit des Konturabschnitts bezüglich seiner gegenüberliegenden Seiten sicherzustellen.

In weiterer Ausgestaltung der Erfindung ist der Konturabschnitt auf einer den Scharnierbereichen gegenüberliegenden Ober- oder Unterseite mit wenigstens einem elastisch dehnbaren Stützstreifen versehen, der in Aufspannrichtung der Abdeckbahn entlang der Lamellen erstreckt und mit wenigstens zwei endseitigen Lamellen verbunden ist. Der Stützstreifen hat in gleicher Weise wie die Kraftschlusserhöhungselemente eine Kraftschlusserhöhungsfunktion zwischen den benachbarten Lamellen und unterstützt das Zusammenfügen der Lamellen in die aneinanderliegende, ebene und bündige Ausrichtung. Der wenigstens eine elastisch dehnbare Stützstreifen kann ergänzend oder alternativ zu Permanentmagnetelementen oder anderen Kraftschlusserhöhungselementen vorgesehen sein.

In weiterer Ausgestaltung der Erfindung ist die Wickelwelle in einer laderaumfest montierbaren Tragstruktur drehbar gelagert, und eine in Aufspannrichtung endseitige Lamelle des Konturabschnitts ist derart gestaltet, dass sie sich in auf die Wickelwelle aufgewickeltem Stauzustand des Konturabschnitts in Aufwickelrichtung an Stützabschnitten der Tragstruktur abstützt. Dadurch ist gewährleistet, dass der Konturabschnitt nicht vollständig auf die Wickelwelle aufgewickelt wird, sondern dass die endseitige Lamelle sich an der Tragstruktur abstützt. Die Wickelwelle ist bei dieser Ausgestaltung in vorteilhafter Weise mit einer Wickelfeder versehen, die die Wickelwelle permanent in Aufwickelrichtung beaufschlagt. Ohne die Abstützung der endseitigen Lamelle würde demzufolge der Konturabschnitt in aufgewickelter Ruhestellung so lange um die Drehachse der Wickelwelle weiterrotieren, bis eine Torsionsvorspannung der Wickelfeder aufgebraucht ist. Die Abstützung durch die endseitige Lamelle gewährleistet die Aufrechterhaltung der Vorspannung dieser Wickelfeder und stabilisiert die Laderaumabdeckung in aufgewickelter Ruhestellung in einem Transportzustand. Die Tragstruktur kann als geschlossenes Kassettengehäuse mit einem Durchtrittsschlitz für die Abdeckbahn und den Konturabschnitt versehen sein, wobei der Durchtrittsschlitz derart gestaltet ist, dass die endseitige Lamelle nicht durch den Durchtrittsschlitz hindurchtreten kann. Alternativ kann die Tragstruktur lediglich durch seitliche Tragkappen gebildet sein, zwischen denen die Wickelwelle sich frei erstreckt und an denen die Wickelwelle gelagert ist. Auch die Tragkappen weisen vorzugsweise eine Gestaltung auf, die die Abstützung der endseitigen Lamelle des Konturabschnitts in der aufgewickelten Ruhestellung der flexiblen Abdeckbahn ermöglicht. Die endseitige Lamelle ist vorzugsweise konturiert gestaltet. In allen Fällen weist die endseitige Lamelle eine unterschiedliche Dimensionierung relativ zu den übrigen Lamellen auf. Die endseitige Lamelle kann auch mit entsprechend nach außen ragenden Halteelementen versehen sein, um die Sicherung in aufgespannter Funktionsstellung in entsprechenden fahrzeugseitigen, laderaumfesten Haltebereichen zu ermöglichen. Diese zu gegenüberliegenden Seiten hin nach außen abragenden Halteelemente können die Stützfunktion an der Tragstruktur in aufgewickelter Ruhestellung der Abdeckbahn bilden.

Eine direkt an den Stirnrand der Abdeckbahn anschließende Anfangslamelle ist vorzugsweise fest mit dem Stirnrand der Abdeckbahn verbunden. Hierzu kann eine Kederverbindung zwischen dem Stirnrand der Abdeckbahn und der Anfangslamelle vorgesehen sein. Die Anfangslamelle kann auch Rastaufnahmen aufweisen, in die ein Abschlussprofil des Stirnrands der Abdeckbahn eingerastet wird.

In weiterer Ausgestaltung der Erfindung ist eine laderaumfeste Führungseinrichtung zum Anheben eines Aufspannniveaus des Konturabschnittes und der Abdeckbahn gegenüber ihrer auf die Wickelwelle aufgewickelten Ruhestellung vorgesehen. Diese Ausgestaltung ist vorteilhaft, wenn die Abdeckbahn und der Konturabschnitt so auf die Wickelwelle aufgewickelt und von der Wickelwelle abgewickelt werden, dass sowohl ein Abziehen von der Wickelwelle als auch ein Aufwickeln auf die Wickelwelle im Bereich einer Unterseite der Wickelwelle erfolgt. Durch die laderaumfest angeordnete Führungseinrichtung kann der Konturabschnitt in Auszugrichtung beabstandet zu der Wickelwelle gemeinsam mit der Abdeckbahn nach oben umgelenkt werden, so dass eine Auszugebene für den Konturabschnitt und die Abdeckbahn im Bereich einer Drehachse der Wickelwelle oder sogar oberhalb einer Drehachse der Wickelwelle vorgesehen ist. Diese Auszugebene entspricht dem Aufspannniveau, das oben aufgeführt wurde. Die Führungseinrichtung kann entweder durch eine Ein- und Auslauframpe im Bereich der laderaumfest montierten Tragstruktur oder durch seitlich an entsprechenden Laderaumbegrenzungsflächen wie insbesondere Laderaumseitenwandungen angeordnete Führungsspuren wie Führungsschienen oder ähnlichem für den Konturabschnitt gebildet sein, in denen entsprechend seitlich nach außen abragende Führungszapfen des Konturabschnittes geführt sind.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch einen Teilbereich eines Personenkraftwagens mit einer Ausführungsform einer erfindungsgemäßen Laderaumabdeckung,
- Fig. 2: in perspektivischer, schematischer Darstellung eine weitere Ausführungsform einer erfindungsgemäßen Laderaumabdeckung ähnlich Fig. 1,
- Fig. 3: schematisch in einer Seitenansicht die Laderaumabdeckung nach Fig. 2,
- Fig. 4: schematisch in einer Seitenansicht die Laderaumabdeckung nach Fig. 3 in einer aufgewickelten Ruhestellung,
- Fig. 5: schematisch in vergrößerter Darstellung einen Querschnitt durch eine Lamelle der Laderaumabdeckung nach den Fig. 2 bis 4,
- Fig. 6: schematisch in einer Querschnittsdarstellung eine weitere Lamelle einer weiteren Ausführungsform einer erfindungsgemäßen Laderaumabdeckung,
- Fig. 7: schematisch einen Teilbereich einer weiteren Ausführungsform einer erfindungsgemäßen Laderaumabdeckung,
- Fig. 8: schematisch einen Teilbereich einer weiteren Ausführungsform einer erfindungsgemäßen Laderaumabdeckung,
- Fig. 9: die Laderaumabdeckung nach Fig. 8 in einer aufgespannten Funktionsstellung und
- Fig. 10: schematisch einen Teilbereich einer weiteren Ausführungsform einer erfindungsgemäßen Laderaumabdeckung.

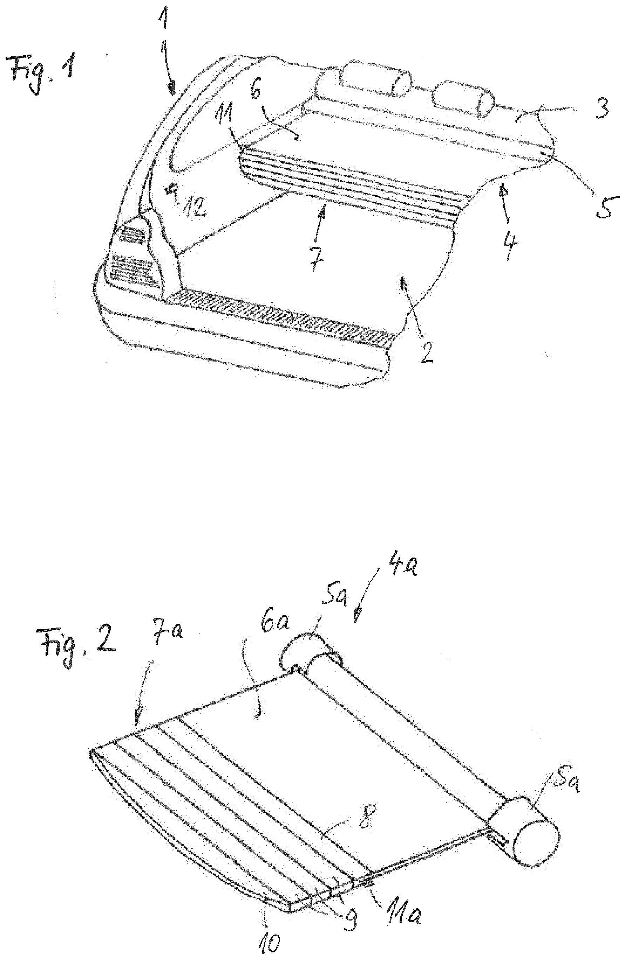

Ein Personenkraftwagen in Form eines Kombi-Personenkraftwagens 1 gemäß Fig. 1 weist in einem Heckbereich einen Laderaum 2 auf. Der Laderaum 2 ist zu einem Fahrzeugheck hin durch eine nicht dargestellte Heckklappe begrenzt. Nach vorne zu einem Fahrgastraum hin ist der Laderaum 2 durch eine Rückenlehnenanordnung 3 einer Fondsitzbank begrenzt. Zu seinen gegenüberliegenden Seiten hin ist der Laderaum 2 durch jeweils eine Laderaumseitenwandung begrenzt. Der Laderaum 2 weist einen nicht näher bezeichneten Laderaumboden auf.

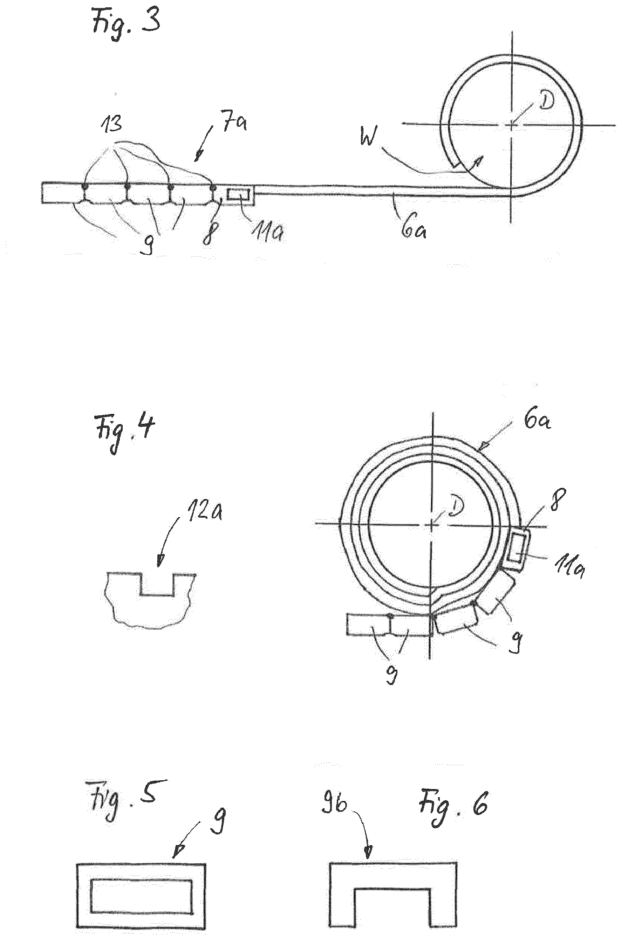

Um in dem Laderaum 2 auf dem Laderaumboden abgelegte Gegenstände vor Blicken von außen verdecken zu können, ist eine Laderaumabdeckung 4 vorgesehen. Die Laderaumabdeckung 4 weist eine flexible Abdeckbahn 6 in Form einer Abdeckplane auf, die auf einer Wickelwelle W (Fig. 3) auf- und abwickelbar gehalten ist. Die Wickelwelle W ist in einer Tragstruktur 5 drehbar gelagert, die bei der Ausführungsform gemäß Fig. 1 als formstabiles Kassettengehäuse gestaltet ist. Das Kassettengehäuse ist auf Höhe einer Fahrzeugseitenbrüstung laderaumseitig befestigt und ist unmittelbar hinter der Rückenlehnenanordnung 3 der Fondsitzbank in befestigtem Zustand positioniert. Das Kassettengehäuse erstreckt sich in Fahrzeugquerrichtung. Die Abdeckplane 6 ist durch einen Durchtrittsschlitz des Kassettengehäuses zu dem Fahrzeugheckbereich hin etwa horizontal nach hinten ausziehbar. Zum Aufwickeln der Abdeckbahn 6 weist die Wickelwelle eine nicht dargestellte, in Aufwickelrichtung wirksame Wickelfeder auf, die auf die Wickelwelle ein permanentes Drehmoment in Aufwickelrichtung ausübt.

Die Abdeckbahn 6 ist an ihrem in Ausziehrichtung vorderen Stirnendbereich mit einem formstabilen Konturabschnitt 7 verbunden, dem zu gegenüberliegenden Seiten nach außen abragende Halteelemente 11 zugeordnet sind, die in laderaumfesten Haltebereichen an den gegenüberliegenden Laderaumseitenwandungen einhängbar sind, um die Abdeckbahn 6 in aufgespannter Funktionsstellung laderaumfest zu sichern. In aufgespannter Funktionsstellung ragt der Konturabschnitt 7 in ebener, formstabiler Ausrichtung nach hinten zu einer Innenseite der nicht dargestellten Heckklappe, um einen zwischen der Innenseite der Heckklappe und dem Stirnendbereich der Abdeckbahn 6 verbleibenden Zwischenraum ebenfalls gegen Blicke von außen zu überdecken.

Erfindungsgemäß wird der Konturabschnitt 7 durch mehrere in Fahrzeugquerrichtung erstreckte und über eine Breite des Konturabschnitts 7 formstabile Lamellen gebildet, die parallel zu einer Drehachse D der Wickelwelle W (Fig. 3) ausgerichtet sind und in Aufspannrichtung der Abdeckplane 6 unmittelbar hintereinander angeordnet sind. Die Lamellen des Konturabschnitts 7 sind über Scharnierbereiche in nachfolgend näher beschriebener Weise miteinander verbunden. Der Konturabschnitt 7 der Laderaumabdeckung 4 gemäß Fig. 1 ist lediglich schematisch dargestellt. Anhand der Fig. 2 bis 10 werden verschiedene Ausführungsformen des Konturabschnitts näher erläutert, die gemäß der Darstellung nach Fig. 1 angeordnet und eingesetzt werden.

Anhand der Fig. 2 ist erkennbar, dass die Laderaumabdeckung 4a, die in gleicher Weise in einem Laderaum eines Personenkraftwagens einsetzbar ist wie die Ausführungsform gemäß Fig. 1, als Tragstruktur 5a nicht mit einem über die gesamte Länge der Tragstruktur durchgängigen Kassettengehäuse, sondern vielmehr mit rohr- oder becherförmigen seitlichen Tragkappen versehen ist, zwischen denen sich die Wickelwelle W erstreckt und an denen die Wickelwelle drehbar gelagert ist. Der Wickelwelle ist bei der Tragstruktur 5a gemäß Fig. 2 in gleicher Weise eine Wickelfeder zugeordnet, wie dies anhand der Ausführungsform nach Fig. 1 bereits beschrieben wurde. Die seitlichen Tragkappen der Tragstruktur 5a sind mit nicht näher bezeichneten Schlitzbereichen versehen, durch die hindurch die Abdeckbahn 6a ein- oder ausgezogen werden kann. Die Laderaumabdeckung 4a ist funktionsgleich gestaltet wie die Laderaumabdeckung 4 gemäß Fig. 1, wobei für gleiche Teile oder Abschnitte gleiche Bezugszeichen unter Hinzufügung des Buchstabens a gewählt wurden. Die Abdeckbahn 6a ist an ihrem in Auszugrichtung vorderen Stirnendbereich mit einem Konturabschnitt 7a versehen, der insgesamt fünf Lamellen aufweist. Die Lamellen werden durch eine anfangsseitige Lamelle 8 gebildet, die an dem Stirnendbereich der Abdeckbahn 6a befestigt ist, und an die in Fahrzeuglängsrichtung nach hinten, d.h. in Auszugrichtung nach vorne, drei weitere Lamellen 9 anschließen. Stirnseitig wird der Konturabschnitt 7a durch eine endseitige Lamelle 10 begrenzt. Die anfangsseitige Lamelle 8 und die Lamellen 9 sind identisch zueinander gestaltet. Alle Lamellen 8 bis 10 sind gemäß Fig. 3 und 4 über Scharnierbereiche 13 miteinander verbunden, die bei der Ausführungsform gemäß den Fig. 2 bis 4 als Festkörpergelenke in Form von Filmscharnieren gebildet sind. Die Lamellen 8, 9 und 10 bestehen aus Kunststoff, wobei die Lamellen 8, 9 als viereckige Hohlprofile gemäß Fig. 5 gestaltet sind. Der anfangsseitigen Lamelle 8 sind die seitlichen Halteelemente 11a zugeordnet, die gemäß Fig. 4 in fahrzeugseitigen Haltebereichen 12a an gegenüberliegenden Laderaumseitenwandungen lösbar fixierbar sind.

Anhand der Fig. 3 und 4 ist erkennbar, dass die Scharnierbereiche 13 im Bereich einer Oberseite des Konturabschnitts 7a zwischen jeweils zwei benachbarten Lamellen 8, 9 vorgesehen sind. Alle Scharnierbereiche definieren Scharnierachsen, die parallel zur Drehachse D der Wickelwelle W ausgerichtet sind. Der Konturabschnitt 7a ist einstückig gestaltet, indem alle Lamellen 8 bis 10 über die als Filmscharniere gestalteten Scharnierbereiche 13 einstückig miteinander verbunden sind.

Anhand der Fig. 2 ist erkennbar, dass die endseitige Lamelle 10 eine andere Außenkontur aufweist als die übrigen Lamellen 8, 9. Die endseitige Lamelle 10 ist zum einen einer Innenkontur der Innenseite der Heckklappe nachgeführt. Zum anderen ist die endseitige Lamelle 10 unterschiedlich zu den übrigen Lamellen 8, 9 gestaltet, um sich an den Schlitzbereichen der Tragstruktur 5a bei einem Aufwickeln der Abdeckbahn 6a und der Lamellen 8, 9 abstützen zu können. Denn dadurch, dass die Scharnierbereiche 13 im Bereich einer Oberseite des Konturabschnitts 7a positioniert sind und die Abdeckbahn 6a gemeinsam mit dem Konturabschnitt 7a von unten her auf die Wickelwelle B aufgewickelt wird, kann sich der Konturabschnitt 7a gemäß Fig. 4 um die Wickelwelle W herum krümmen, so dass der Konturabschnitt 7a auf die Wickelwelle W teilweise mit aufgewickelt werden kann. Die endseitige Lamelle 10, die sich an den Schlitzbereichen der Tragstruktur 5a abstützt, verhindert, dass der Konturabschnitt 7a vollständig auf die Wickelwelle W aufgewickelt wird, wodurch die Wickelwelle W aufgrund fehlender Gegenkräfte durch die Rückholkraft der Wickelfeder so lange in Aufwickelrichtung weitergedreht werden könnte, bis die Wickelfeder ihre Vorspannung verloren hätte. Durch die Abstützung der endseitigen Lamelle 10 verbleibt die Wickelfeder in einer gewünschten Vorspannstellung und der Konturabschnitt 7a verbleibt in einem definiert aufgewickelten Zustand.

Wie bereits beschrieben, sind die Lamellen 8, 9 mit viereckigen Querschnittsprofilen (Fig. 5) versehen, genauer gesagt mit rechteckigen Querschnittskonturen. Hierdurch ergeben sich unterhalb der Scharnierbereiche 13 Stützbereiche der jeweils paarweise aneinanderliegenden Seitenwandungen benachbarter Lamellen 8, 9, so dass der Konturabschnitt 7a in aufgespannter Funktionsstellung, in der die Halteelemente 11a in den Haltebereichen 12a eingehängt sind, in ebener Ausrichtung frei nach hinten zu dem Heckbereich hin abragt.

Anhand der Fig. 6 ist erkennbar, dass die Lamellen 9b auch mit einem U-förmigen Querschnittsprofil versehen sein können und dennoch in gleicher Weise bei dem Konturabschnitt 7a gemäß den Fig. 2 bis 4 eingesetzt werden können. Entsprechende U-Schenkel der Lamellen 9b sind nach unten gerichtet, so dass die Lamellen 9b im Bereich ihrer Oberseiten, die auch die Scharnierbereiche 13 umfassen, eine ebene, flächige Gestaltung beibehalten.

Bei der Ausführungsform gemäß den Fig. 2 bis 4 können die Scharnierbereiche 13 auch durch Scharniergelenke gebildet sein, wobei entsprechende Gelenkteile jeweils an den paarweise benachbarten Seitenbereichen der Lamellen 8, 9, 10 vorgesehen sind. Die einander paarweise zugeordneten Gelenkteile sind komplementär zueinander ausgeführt und können über eine Scharnierachse, vorzugsweise in Form eines Rundstabs, miteinander unter Bildung des gewünschten Scharniergelenks verbunden werden. Bei einer solchen Ausgestaltung sind die Lamellen 8 bis 10 zunächst separat voneinander hergestellt und anschließend über die Scharnierachsen miteinander verbunden.

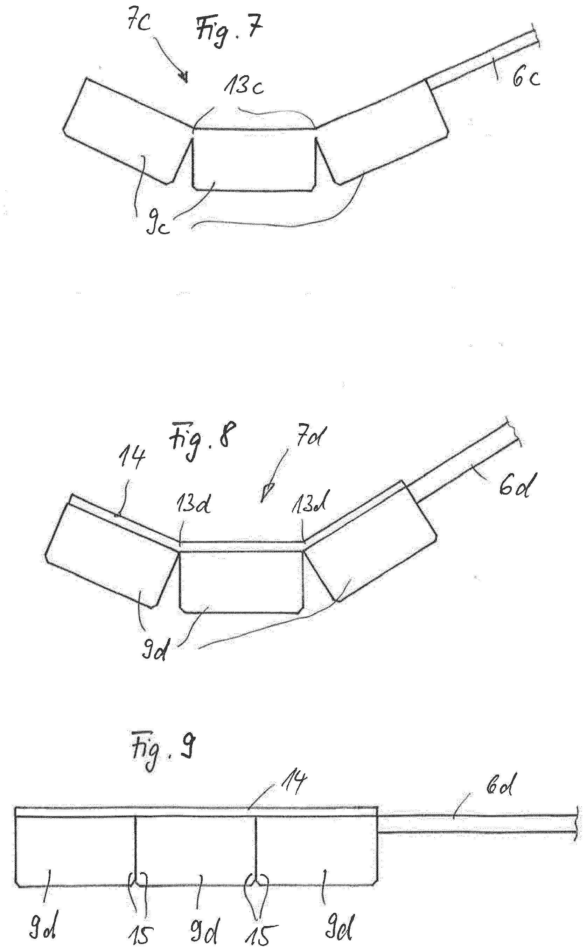

Anhand der Fig. 7 bis 10 sind verschiedene Modifikationen von Konturabschnitten 7a bis 7e dargestellt, die in gleicher Weise bei einer Laderaumabdeckung 4 oder 4a eingesetzt werden können, wie dies anhand der Fig. 1 bis 6 bereits beschrieben wurde. Zur Vermeidung von Wiederholungen wird demzufolge auf die Offenbarung zu den Laderaumabdeckungen 4 und 4a gemäß den Fig. 1 bis 6 verwiesen. Die jeweilige Abdeckbahn 6c bis 6e ist identisch gestaltet wie die Abdeckbahnen 6 oder 6a gemäß den Fig. 1 und 2 und ist für eine einfache Zuordnung zu der jeweiligen Ausführungsform ergänzend mit einem Buchstaben c, d oder e versehen.

Bei allen Ausführungsformen ist ein entsprechender Stirnendbereich der Abdeckplane 6 bis 6e lösbar oder unlösbar, formschlüssig, kraftschlüssig oder stoffschlüssig oder als Kombination der verschiedenen Verbindungsarten mit der jeweils anfangsseitigen Lamelle 8, 9a bis 9e verbunden.

Bei der Ausführungsform gemäß Fig. 7 ist der Konturabschnitt 7c als einteiliges Kunststoffbauteil ausgeführt, wobei die einzelnen Lamellen 9c im Bereich ihrer Oberseite über Festkörpergelenke 13c miteinander verbunden sind. Die Festkörpergelenke 13c, die entsprechende Scharnierbereiche darstellen, sind durch Stegverbindungen in Form von Filmscharnieren gebildet.

Bei der Ausführungsform nach Fig. 8 weist der Konturabschnitt 7d voneinander getrennt hergestellte Lamellen 9d auf, die im Bereich ihrer Oberseite über eine flexible Materialbahn 14 miteinander verbunden sind. Die Materialbahn 14 erstreckt sich über eine gesamte Breite und Länge aller Lamellen 9d und demzufolge des gesamten Konturabschnitts 7d, so dass die Materialbahn 14 eine oberseitige Beschichtung des Konturabschnitts 7d bildet. Die Materialbahn 14 wird durch eine ein- oder mehrlagige Bahnstruktur aus einer Kunststofffolie oder einer Textilbahn gebildet. Die Lamellen 9d können aus Kunststoff, aus Holz, aus Pappe, aus Pressspan oder aus ähnlichen, ausreichend formsteifen Materialien hergestellt sein. Die Materialbahn 14 ist beim Ausführungsbeispiel gemäß den Fig. 8 und 9 flächig mit den Oberseiten der Lamellen 9d verbunden. Eine entsprechend flächige Verbindung kann durch doppelseitiges Klebeband, durch eine Klebstoffschicht eines Flüssigklebers oder durch Verschweißung oder auch durch andere Verbindungsarten erfolgen. Anhand der Fig. 8 und 9 ist auch erkennbar, dass die Lamellen 9d analog der zuvor beschriebenen Ausführungsformen im Wesentlichen rechteckige Außenkonturen - auf ein Querschnittsprofil der Lamellen 9b bezogen - aufweisen, die flächig aneinanderliegende Seitenwandungen definieren. Diese Seitenwandungen der jeweils benachbarten Lamellen 9d bilden in Abstand unterhalb der Scharnierbereiche 13d, die durch die Materialbahn 14 gebildet werden, Stützbereiche 15, durch die die Lamellen 9d sich gemäß Fig. 9 in aufgespannter Funktionsstellung des Konturabschnitts 7d und der Abdeckbahn 6d in ebener Ausrichtung aneinander abstützen.

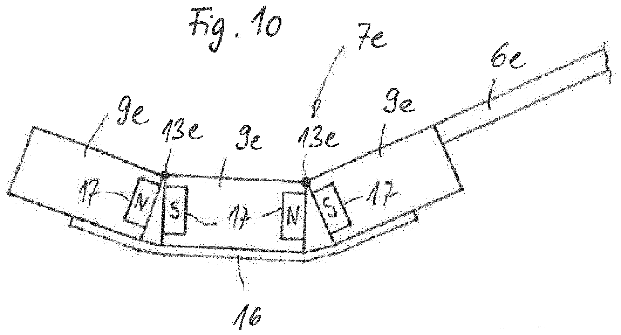

Bei der Ausführungsform gemäß Fig. 10 wird eine ebene Ausrichtung des Konturabschnitts 7e in aufgespannter Funktionsstellung der Abdeckbahn 6e noch durch zusätzliche Kraftschlusserhöhungselemente 17 in Form von Permanentmagneten unterstützt, die die einander zugewandten Seitenwandungen der benachbarten Lamellen 9e gegeneinander ziehen und so die bündige und ebene Ausrichtung der Lamellen 9e zueinander unterstützen.

Ergänzend oder alternativ zu entsprechenden Permanentmagneten weist der Konturabschnitt 7e auf seiner den Scharnierbereichen 13e gegenüberliegenden Unterseite wenigstens noch einen elastisch dehnbaren Stützstreifen 16 auf, der vorzugsweise aus einem Elastomermaterial hergestellt ist. Sobald der Konturabschnitt 7e aus seiner ebenen Ausrichtung in seine gekrümmte Ausrichtung gemäß Fig. 10 überführt wird, wird der wenigstens eine elastische Stützstreifen 16, der mit allen Lamellen 9e verbunden ist, im Übergangsbereich zwischen den jeweils benachbarten Lamellen 9e elastisch gedehnt, wodurch zwangsläufig Zugkräfte entstehen, die auf die Lamellen 9e wirken. Diese Zugkräfte versuchen die Lamellen 9e im Bereich ihrer den Scharnierbereichen 13e gegenüberliegenden Unterseite wieder gegeneinander zu ziehen, wodurch der wenigstens eine Stützstreifen 16 das Zusammenziehen der Lamellen 9e zu der ebenen und bündigen Ausrichtung unterstützt. Der wenigstens eine Stützstreifen 16 kann auch lediglich an den endseitigen Lamellen befestigt sein und an den dazwischenliegenden Lamellen lediglich unter Vorspannung anliegen, ohne mit diesen fest verbunden zu sein.

Statt einer einzelnen Materialbahn 14 gemäß den Fig. 8 und 9 können auch mehrere, in Längsrichtung der Abdeckbahn 6d und demzufolge in Auszugrichtung erstreckte flexible Bänder vorgesehen sein, die parallel zueinander ausgerichtet und über die Breite des Konturabschnitts 7d verteilt angeordnet sind. Diese flexiblen Bänder können in gleicher Weise mit den Oberseiten der Lamellen 9d verbunden sein, wie dies für die Materialbahn 14 gemäß den Fig. 8 und 9 näher beschrieben wurde.

Bei allen Ausführungsformen gemäß den Fig. 1 bis 10 wird der jeweilige Konturabschnitt 7 bis 7e zumindest weitgehend auf die Wickelwelle W aufgewickelt, wodurch sich für den jeweiligen Konturabschnitt 7 bis 7e eine Krümmungsachse ergibt, die parallel oder koaxial zur Drehachse D der Wickelwelle W ausgerichtet ist. In aufgespannter Funktionsstellung der Abdeckbahn 6 bis 6e und der Konturabschnitte 7 bis 7e ist der Konturabschnitt 7 bis 7e jeweils im Bereich seiner anfangsseitigen Lamelle 8, 9 bis 9e, d.h. im Bereich der Lamelle, die unmittelbar an den Stirnendbereich der Abdeckbahn 6 bis 6e anschließt, in den laderaumseitigen Haltebereichen 12, 12a lösbar gehalten. Dadurch ragen die zum Heckbereich an die anfangsseitige Lamelle anschließenden Lamellen frei nach hinten ab. Durch das Eigengewicht der Lamellen 9 bis 9e und durch die Anordnung der Scharnierbereiche exzentrisch zu einer Mittellängsebene des jeweiligen Konturabschnitts 7 bis 7e im Bereich einer Oberseite versuchen die Lamellen, jeweils nach unten abzukippen und werden durch die Stützbereiche im Bereich der Unterseite und durch die zueinander parallelen, einander zugewandten Seitenwandungen jeweils benachbarter Lamellen gegeneinander gestützt. Hierdurch ergibt sich die gewünschte ebene und formstabile Ausrichtung des jeweiligen Konturabschnitts 7 bis 7e in der aufgespannten Funktionsstellung der jeweiligen Abdeckbahn 6 bis 6e.

## Patentansprüche

1. Laderaumabdeckung für ein Kraftfahrzeug mit einer flexiblen Abdeckbahn (6 bis 6e), die auf einer Wickelwelle (W) zwischen einer aufgespannten Funktionsstellung und einer aufgewickelten Ruhestellung auf- und abwickelbar gehalten ist, sowie mit einem zumindest weitgehend formstabilen Konturabschnitt (7 bis 7e), der an einem in Aufspannrichtung vorderen Stirnendbereich der Abdeckbahn (6 bis 6e) angebracht ist, und dem Halteelemente (11, 11a) zur Sicherung des Konturabschnitts in der aufgespannten Funktionsstellung der Abdeckbahn (6 bis 6e) an laderaumfesten Haltebereichen (12, 12a) zugeordnet sind, **dadurch gekennzeichnet, dass** der Konturabschnitt (7 bis 7e) zum zumindest teilweisen Aufwickeln auf die Wickelwelle (W) gemeinsam mit der Abdeckbahn (6 bis 6e) derart gestaltet ist, dass er ausgehend von einer ebenen Ausrichtung zu einer Seite hin relativ zu einer parallel oder koaxial zu einer Drehachse (D) der Wickelwelle (W) ausgerichteten Krümmungsachse krümmbar und zu der gegenüberliegenden Seite hin in der ebenen Ausrichtung formsteif gestützt ist.

2. Laderaumabdeckung nach Anspruch 1, **dadurch gekennzeichnet, dass** der Konturabschnitt (7 bis 7e) mehrere, quer zu der Aufspannrichtung erstreckte und in Aufspannrichtung hintereinander angeordnete Lamellen (8, 9 bis 9e, 10) aufweist, die über Scharnierbereiche (13, 13c, 13d, 13e) miteinander verbunden sind.

3. Laderaumabdeckung nach Anspruch 2, **dadurch gekennzeichnet, dass** die Lamellen (9 bis 9e) einander paarweise zugewandte Stützbereiche (15) aufweisen, die sich in der ebenen Ausrichtung des Konturabschnitts (7 bis 7e) gegeneinander abstützen.

4. Laderaumabdeckung nach einem der Ansprüche 1 bis 3, **dadurch gekennzeichnet, dass** die Lamellen als Massivkörper oder als offene oder geschlossene Hohlprofile gestaltet sind.

5. Laderaumabdeckung nach einem der Ansprüche 1 bis 4, **dadurch gekennzeichnet, dass** die Lamellen ein- oder mehrschichtig oder ein- oder mehrkomponentig aufgebaut sind.

6. Laderaumabdeckung nach Anspruch 2, **dadurch gekennzeichnet, dass** die Scharnierbereiche durch Festkörpergelenke gebildet sind, die insbesondere einstückig an den Lamellen angeformt sind.

7. Laderaumabdeckung nach Anspruch 2, **dadurch gekennzeichnet, dass** die Scharnierbereiche durch Scharniergelenke gebildet sind, die zueinander komplementäre Gelenkteile aufweisen, die jeweils paarweise benachbarten Seitenbereichen der Lamellen zugeordnet sind.

8. Laderaumabdeckung nach Anspruch 6, **dadurch gekennzeichnet, dass** die Festkörpergelenke durch wenigstens zwei in Aufspannrichtung parallel zueinander verlaufende, flexible Bänder gebildet sind, die mit den Lamellen auf einer Seite verbunden sind.

9. Laderaumabdeckung nach einem der vorhergehenden Ansprüche, **dadurch gekennzeichnet, dass** den Stützbereichen der Lamellen Kraftschlusserhöhungselemente (17), insbesondere Permanentmagnetelemente, zugeordnet sind, die in ebener Ausrichtung des Konturabschnitts (7e) wirksam sind.

10. Laderaumabdeckung nach einem der vorhergehenden Ansprüche, **dadurch gekennzeichnet, dass** die Scharnierbereiche exzentrisch zu einer Mittellängsebene des Konturabschnitts (7 bis 7e) vorgesehen sind.

11. Laderaumabdeckung nach Anspruch 10, **dadurch gekennzeichnet, dass** der Konturabschnitt (7e) auf einer den Scharnierbereichen (13e) gegenüberliegenden Ober- oder Unterseite mit wenigstens einem elastisch dehnbaren Stützstreifen (16) versehen ist, der in Aufspannrichtung der Abdeckbahn (6e) entlang den Lamellen (9e) erstreckt und mit wenigstens zwei endseitigen Lamellen (9e) verbunden ist.

12. Laderaumabdeckung nach einem der vorhergehenden Ansprüche, **dadurch gekennzeichnet, dass** die Wickelwelle (W) in einer laderaumfest montierbaren Tragstruktur (5, 5a) drehbar gelagert ist, und dass eine in Aufspannrichtung endseitige Lamelle (10) des Konturabschnitts (7 bis 7e) derart gestaltet ist, dass sie sich in auf die Wickelwelle (W) aufgewickeltem Stauzustand des Konturabschnitts (7 bis 7e) in Aufwickelrichtung an Stützabschnitten der Tragstruktur (5, 5a) abstützt.

13. Laderaumabdeckung nach einem der vorhergehenden Ansprüche, **dadurch gekennzeichnet, dass** eine laderaumfeste Führungseinrichtung zum Anheben eines Aufspannniveaus des Konturabschnittes und der Abdeckbahn gegenüber ihrer auf der Wickelwelle aufgewickelten Ruhestellung vorgesehen ist.

## Claims

1. Luggage compartment cover for a motor vehicle, comprising a flexible cover sheet (6 to 6e), which is held on a winding shaft (W) so as to be able to be wound up and unwound between an extended functional position and a wound-up inoperative position, and comprising an at least largely dimensionally stable contour portion (7 to 7e), which is attached to a front end region of the cover sheet (6 to 6e) in the direction of extension, and to which holding elements (11, 11a) are assigned for securing the contour portion in the extended functional position of the cover sheet (6 to 6e) on holding regions (12, 12a) fixed to the luggage compartment,
**characterized in that**
the contour portion (7 to 7e), for at least partially winding up onto the winding shaft (W) together with the cover sheet (6 to 6e), is configured in such a manner that, starting from a flat orientation, it is supported so as to be able to be curved toward one side relative to an axis of curvature oriented in parallel or coaxially with respect to an axis of rotation (D) of the winding shaft (W) and so as to be dimensionally rigid toward the opposite side in the flat orientation.

2. Luggage compartment cover according to claim 1, **characterized in that** the contour portion (7 to 7e) has a plurality of slats (8, 9 to 9e, 10) which extend transversely with respect to the direction of extension and are arranged one behind another in the direction of extension and are connected to one another via hinge regions (13, 13c, 13d, 13e).

3. Luggage compartment cover according to claim 2, **characterized in that** the slats (9 to 9e) have supporting regions (15) which face one another in pairs and are supported against one another in the flat orientation of the contour portion (7 to 7e).

4. Luggage compartment cover according to any of claims 1 to 3, **characterized in that** the slats are configured as solid bodies or as open or closed hollow profiles.

5. Luggage compartment cover according to any of claims 1 to 4, **characterized in that** the slats are constructed as a single layer or multiple layers, or as a single component or multiple components.

6. Luggage compartment cover according to claim 2, **characterized in that** the hinge regions are formed by solid body joints which in particular are integrally formed on the slats.

7. Luggage compartment cover according to claim 2, **characterized in that** the hinge regions are formed by hinge joints which have mutually complementary joint parts which are assigned to side regions of the slats that are respectively adjacent in pairs.

8. Luggage compartment cover according to claim 6, **characterized in that** the solid body joints are formed by at least two flexible bands which run parallel to one another in the direction of extension and are connected to the slats on one side.

9. Luggage compartment cover according to any of the preceding claims, **characterized in that** the supporting regions of the slats are assigned friction-increasing elements (17), in particular permanent magnet elements, which are effective in a flat orientation of the contour portion (7e).

10. Luggage compartment cover according to any of the preceding claims, **characterized in that** the hinge regions are provided eccentrically with respect to a center longitudinal plane of the contour portion (7 to 7e).

11. Luggage compartment cover according to claim 10, **characterized in that** the contour portion (7e) on an upper or lower side lying opposite the hinge regions (13e) is provided with at least one elastically stretchable supporting strip (16) which, in the direction of extension of the cover sheet (6e), extends along the slats (9e) and is connected to at least two end-side slats (9e).

12. Luggage compartment cover according to any of the preceding claims, **characterized in that** the winding shaft (W) is mounted rotatably in a carrying structure (5, 5a), which can be mounted fixed to the luggage compartment, and **in that** an end-side slat (10) of the contour portion (7 to 7e) in the direction of extension is configured in such a manner that, in the stowed state of the contour portion (7 to 7e) wound up onto the winding shaft (W), said slat is supported in the winding-up direction on supporting portions of the carrying structure (5, 5a).

13. Luggage compartment cover according to any of the preceding claims, **characterized in that** a guide device which is fixed to the luggage compartment is provided for raising an extension level of the contour portion and of the cover sheet in relation to their inoperative position wound up on the winding shaft.

## Revendications

1. Dispositif de recouvrement d'un compartiment de bagages pour un véhicule automobile, comprenant une feuille de couverture (6 à 6e) flexible, retenue sur un arbre d'enroulement (W) de manière enroulable et déroulable entre une position de fonctionnement déployée et une position de repos enroulée, ainsi que comprenant une section de contour (7 à 7e) au moins largement dimensionnellement stable, ladite section agencée sur une zone d'extrémité frontale avant dans la direction de déploiement de la feuille de couverture (6 à 6e), et des éléments de maintien (11, 11a) pour arrêter la section de contour dans la position de fonctionnement déployée de la feuille de couverture (6 à 6e) sont associés à zones de maintien (12, 12a) fixées au compartiment de bagages,
**caractérisé en ce que**
la section de contour (7 à 7e) est configurée, pour au moins partiellement enrouler sur l'arbre d'enroulement (W) conjointement avec la feuille de couverture (6 à 6e), de telle manière que, à partir d'une orientation plane, ladite section est supportée afin d'être capable d'être courbée vers un côté par rapport à un axe de courbure orienté parallèlement ou coaxialement par rapport à un axe de rotation (D) de l'arbre d'enroulement (W) et afin d'être dimensionnellement rigide vers le côté opposé dans l'orientation plane.

2. Dispositif de recouvrement d'un compartiment de bagages selon la revendication 1, **caractérisé en ce que** la section de contour (7 à 7e) comporte plusieurs lamelles (8, 9 à 9e, 10) s'étendant transversalement par rapport à la direction de déploiement et arrangées l'une derrière l'autre dans la direction de déploiement, lesdites lamelles reliées l'une à l'autre par des régions de charnière (13, 13c, 13d, 13e).

3. Dispositif de recouvrement d'un compartiment de bagages selon la revendication 2, **caractérisé en ce que** les lamelles (9 à 9e) présentent régions de support (15) se faisant face par paires, lesdites régions de support s'appuyant l'une à l'autre dans l'orientation plane de la section de contour (7 à 7e).

4. Dispositif de recouvrement d'un compartiment de bagages selon l'une quelconque des revendications 1 à 3, **caractérisé en ce que** les lamelles sont configurées sous forme de corps solide ou sous forme de profilés creux ouverts ou fermés.

5. Dispositif de recouvrement d'un compartiment de bagages selon l'une quelconque des revendications 1 à 4, **caractérisé en ce que** les lamelles sont construites sous forme d'une seule couche ou de plusieurs couches, ou sous forme d'un seul composant ou de plusieurs composants.

6. Dispositif de recouvrement d'un compartiment de bagages selon la revendication 2, **caractérisé en ce que** les régions de charnière sont formées par des articulations à corps solide, en particulier moulées sur les lamelles intégralement.

7. Dispositif de recouvrement d'un compartiment de bagages selon la revendication 2, **caractérisé en ce que** les régions de charnière sont formées par des articulations à charnière présentant parties d'articulation complémentaires l'une à l'autre, associées à régions latérales des lamelles adjacentes respectivement par paires.

8. Dispositif de recouvrement d'un compartiment de bagages selon la revendication 6, **caractérisé en ce que** les articulations à corps solide sont constituées par au moins deux bandes flexibles, s'étendant dans la direction de déploiement parallèlement l'une à l'autre, lesdites bandes reliées aux lamelles sur un côté.

9. Dispositif de recouvrement d'un compartiment de bagages selon l'une quelconque des revendications précédentes, **caractérisé en ce que** des éléments augmentant le frottement (17) sont associés aux régions de support des lamelles, en particulier des éléments d'aimant permanent, lesdits éléments étant efficaces dans l'orientation plane de la section de contour (7e).

10. Dispositif de recouvrement d'un compartiment de bagages selon l'une quelconque des revendications précédentes, **caractérisé en ce que** les régions de charnière sont agencées excentriquement par rapport à un plan longitudinal médian de la section de contour (7 à 7e).

11. Dispositif de recouvrement d'un compartiment de bagages selon la revendication 10, **caractérisé en ce que** la section de contour (7e) est muni d'au moins une bande de support (16) élastiquement extensible sur un côté supérieur ou inférieur opposé aux régions de charnière (13e), ladite bande de support s'étendant le long des lamelles (9e) dans la direction de déploiement de la feuille de couverture (6e) et reliée à au moins deux lamelles (9e) côté d'extrémité.

12. Dispositif de recouvrement d'un compartiment de bagages selon l'une quelconque des revendications précédentes, **caractérisé en ce que** l'arbre d'enroulement (W) est monté à rotation dans une structure portante (5, 5a) pouvant être montée fixée au compartiment de bagages, et **en ce qu'**une lamelle (10) de la section de contour (7 à 7e) située côté d'extrémité dans la direction de déploiement est configurée de telle manière que ladite lamelle prend appui sur sections de support de la structure portante (5, 5a) dans la direction d'enroulement dans l'état rangé de la section de contour (7 à 7e) enroulé sur l'arbre d'enroulement (W).

13. Dispositif de recouvrement d'un compartiment de bagages selon l'une quelconque des revendications précédentes, **caractérisé en ce qu'**un dispositif de guidage fixé au compartiment de bagages est prévu pour élever un niveau de déploiement de la section de contour et de la feuille de couverture par rapport à leur position de repos enroulée sur l'arbre d'enroulement.
